# EUROPEAN PATENT SPECIFICATION

(11) **EP 3 212 822 B1**
(45) Date of publication and mention of the grant of the patent: **08.05.2019**
(21) Application number: 15750620.5
(22) Date of filing: 08.07.2015
(51) Int. Cl.: C25D 3/04, C25D 3/12, C25D 5/14, C25D 15/00

(54) **A GALVANIC PROCESS AND CHROMED MATERIAL WITH SILVER NANOPARTICLES**
GALVANISCHES VERFAHREN UND VERCHROMTES MATERIAL MIT SILBERNANOPARTIKELN
PROCESSUS GALVANIQUE ET MATÉRIAU CHROMÉ CONTENANT DES NANOPARTICULES D'ARGENT

(30) Priority: 29.10.2014 BR 102014027007
(43) Date of publication of application: 06.09.2017
(73) Proprietor: Docol Metais Sanitários Ltda., 89239-280 Joinville - SC (BR)
(72) Inventor: DOUBRAWA, Ingo, 89204-510 Joinville - SC (BR)
(74) Representative: Abel & Imray
(86) International application number: PCT/BR2015/050087
(87) International publication number: WO 2016/065449

(56) References cited:
- EP-A2- 1 835 051
- DE-A1-102010 012 003
- JP-A- H1 068 100

## Description

### INTRODUCTION

The present invention relates to a process for galvanizing metals or plastics, which comprises adding silver nanoparticles in order to impart to the galvanized object antibacterial protection, besides keeping the properties of resistance to corrosion and to wear. The present invention also relates to materials containing said silver nanoparticles.

### PRIOR ART

The galvanic process is a chemical or electrolytic process of depositing a thin layer of a metal onto a surface, which may or may not be a metallic surface, for the purpose of embellishing the parts, increasing their durability by virtue of better surface properties, besides imparting corrosion resistance.

At present, there are a growing number of recently registered cases of hospital infections caused by bacteria. Such bacteria become more and more resistant to medical procedures, so that, in order to prevent this type of contamination, there is a growing demand for solutions in the segment of sanitary metals with a view to block the proliferation of these bacteria.

The great majority of the technologies available in the segment of sanitary metals, for instance, which are based on the application of paints and varnishes additivated with nanoparticles or fungicides. Such solutions have, indeed, an effect, but with the disadvantage of having reduced durability, limited by the resistance of the paint or varnish.

In turn, the use of the nanotechnology for antibacterial action is already known. Among the most widely used materials are Silver and Titanium, which are used since the 18th century in controlling and eliminating bacteria and fungi in hospitals, by virtue of their known antimicrobial characteristics.

Among the examples of this use, one can cite: antimicrobial bandages; biocides for medical and pharmaceutical use; disinfectants and water cleaners; materials for medical use (catheters, cardiac valves, orthopedic implants, etc.; dentistry materials; ceramics and antibacterial thermoplastics; and anti-mold paints and varnishes.

An example of a process for providing antibacterial properties to metal coated objects is described in the Japanese patent application JPH1068100, which discloses a nickel-chromium plating process wherein an inorganic antibacterial agent, such as silver, is dispersed within a nickel layer.

However, one has observed the need to provide antibacterial protection on galvanized materials on the most varied devices or materials, such as sanitary metals (taps, etc.), door-nobs, keys, spoons, forks and knives, pens, shears, glasses, cellular phones, bath room fittings, material and surgical devices, or other metals or manipulated plastics of public or household use, which may be bacterium carriers.

In this regards, the present invention provides a solution in the form of a product containing the technology of the present invention and a process for obtaining surfaces additivated with nanoparticles, which comprises incorporating silver nanoparticles in the galvanic process, thus imparting to the galvanized object efficient antibacterial action and prolonged durability, since they remain linked to the galvanization resistance, which is much greater than the resistance presently imparted by paints and varnishes.

### OBJECTIVES OF THE INVENTION

The present invention aims at proposing a galvanic process which comprises incorporating silver nanoparticles having antibacterial effect to materials and utensils of the most diverse applications, preventing the application of paints or varnishes to impart such a property.

The galvanic process of the present invention provides metallic or polymeric surfaces additivated with nanoparticles that have an efficient antibacterial action, besides the already known characteristics of the galvanic process itself, such as high resistance to corrosion and to wear, without altering the properties of brightness and cleaning ease.

The use of said metallic surface for application on sanitary products is also described.

### BRIEF DESCRIPTION OF THE INVENTION

The present invention consists of a galvanic process comprising at least one substrate (100), onto which it is applied:
(i) at least one nickel bath (10b) that results in at least one nickel layer (101); and
(ii) at least one chrome bath (14) that results in at least one chrome layer (102);
the galvanic process being such that the at least one nickel bath (10b) and the at least one chrome bath (14) are metal baths wherein the substrate (100) is fixed to a negative pole of a source of direct current and is then put into a solution in which there are dispersed metallic ions, the substrate (100) playing the role of a cathode and at least one nickel bath (10b) incorporates silver nanoparticles which comprise silver oxide in its pure state with 95%-99.9% purity, and characterised in that the silver nanoparticles have a diameter ranging from 30 to 50 nm.

The present invention further consists of a material with silver nanoparticles, comprising at least one nickel layer (101) overlapping a substrate (100) and at least one chrome layer (102) overlapping the at least one nickel layer (101), wherein:
(i) the thickness of each nickel layer (101) ranges from 5 to 30 µm and at least one nickel layer (101) has dispersed silver nanoparticles, the silver nanoparticles comprising silver oxide in its pure state with 95-99% purity; and
(ii) the thickness of the chrome layer (102) ranges from 0.2 µm to 1 µm;
characterized in that the silver nanoparticles have a diameter ranging from 30 to 50 nm.

Also described is the use of a material additivated with silver nanoparticles, obtained by the described process , wherein one may apply it to metallic or plastic substrates for antibacterial purposes.

Also described herein is a material comprising at least one plastic or metallic substrate, onto which at least one layer of nickel and at least one outer chrome layer are applied, characterized in that the nickel layer comprises silver particles and the chrome layer is permeable to contact with the silver particles present in the nickel layer.

### DESCRIPTION OF THE DRAWINGS

Figure 1 shows a flowchart indicating one of the possible preferred embodiments of the process of the present invention, comprising the main steps of galvanic deposition bath, wherein the incorporation of nanoparticles may be observed in the phase (10b); and
Figure 2 shows a material comprising the antibacterial galvanic deposition of the present invention.

### DETAILED DESCRIPTION OF THE INVENTION

The present invention consists of a galvanic process and a material with silver nanoparticles as defined herein.

By "metal bath" one understands the galvanic step in which the substrate 100 is fixed to the negative pole of a source of direct current and is then put into a solution ion which there are dispersed metallic ions. Since the substrate 100 plays the role of a cathode, there is deposition of the metal in solution onto the surface thereof, forming a thin metallic layer.

The conventional galvanic process comprises, in a preferably but not compulsory manner, the following 15 steps: chemical degreasing 1; washing in water 2; cathodic electrolytic degreasing 3; anotic electrolytic degreasing 4; washing with water 5; washing with water 6; acidic activation 7; neutral activation 8; washing with water 9; at least one bath in nickel 10a; three-time washing with water 11, 12, 13; bath in chrome solution 14; and washing in water 15, among which said metallic baths correspond to steps 10a and 14.

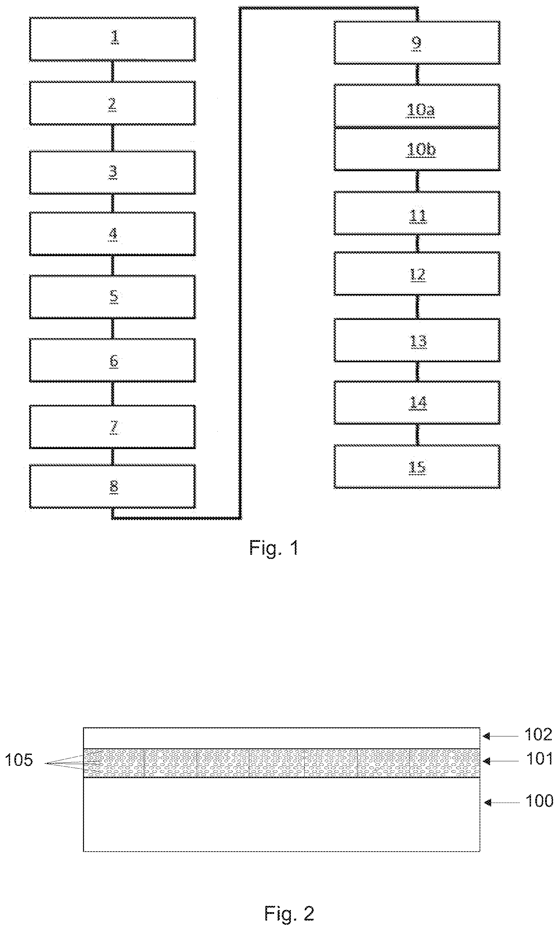

The complete galvanic process described herein, that is, the one applied to a material that is additivated with silver nanoparticles comprises the same phases cited above of a conventional galvanic process, with the basic difference that one adds a phase that accounts for the antibacterial action (also usually called antimicrobial or bactericidal action) of the product, as shown in figure 1.

More specifically, the complete galvanic process for materials additivated with silver nanoparticles comprises a differentiated additional step in which at least one nickel bath is additivated with silver nanoparticles 10b.

Thus, the galvanic process described herein comprises, in a preferred but not compulsory manner, the steps of: chemical degreasing 1; washing in water 2; cathotic electrolytic degreasing 3; andic electrolytic degreasing 4; washing with water 5; washing with water 6; acidic activation 7; neutral activation 8; washing with water (9); at least one nickel bath 10a; nickel bath additivated with silver nanoparticles 10b; three-time washing with water 11, 12, 13; bath in chrome solution 14; and washing in water 15, thus comprising the metallic bathes 10a, 10b and 14.

In a preferred embodiment of the invention, additivation with silver nanoparticles takes place in the nickel bath 10b of the nickel layer 101 in contact with the chrome layer 102, that is, in the last nickel layer 101.

It should be noted, in synthesis, that the present invention may further comprise a layer of nickel 101 additivated with silver nanoparticles. Thus, the steps 10a and 10b would be carried out only in a step equivalent to step 10b. Indeed, the various steps for application of the nickel layer 101, for the sake of handling economy, may all be carried out in a nickel bath additivated with silver nanoparticles, that is, the present invention may be achieved with a single step corresponding to step 10b or with a number of repeated steps 10b.

It was observed that the incorporation of silver nanoparticles into the nickel bath 10b provided an antibacterial action that reaches the outer surface of the chromed layer. Thus, the present invention consists of a galvanic process in which there is incorporation of silver nanoparticles into at least one nickel bath, imparting antibacterial properties to the galvanized substrate 100. Naturally the present invention also foresees a material/device with the antibacterial action.

In an embodiment of the invention, the galvanic process of the present invention comprises, in a preferred but not compulsory manner, and therefore not limiting the protection scope of the present invention, the following steps:
(i) subjecting the substrate 100 to one or more nickel baths (10a) after the neutral activation step (8), said nickel bath being composed of: nickel sulfate, nickel chloride, boric acid and commercial brightener additive with current density of 3-6 A/m² for 9 - 11 minutes (6 - 10 Volts), wherein at least one nickel bath is additivated with silver nanoparticles (10b);
(ii) subjecting the substrate 100 obtained in step (1) to chrome solution bath (14) composed chrome salt, sulfuric acid and commercial catalysts, for at least 2 minutes and 15 seconds to at least 4 minutes and 15 seconds, with current density of substantially 0.08 - 0.32 A/M2 (8 - 10 Volts), preferably with 0.16 A/m².

By "substrate 100" one understands the metals selected from: copper and alloys thereof; zinc and alloys thereof; aluminum and alloys thereof; and steel. The substrate 100 may also comprise any type of plastic in which it is possible to have galvanized surface, such as ABS (Acrylinitrile butadiene styrene), Nylon (polyamide) and PBT (Polybutylene Terephthalate), or any other that enables such galvanic deposition or galvanoplasty.

The nanoparticles used in the invention comprise silver oxide in its pure state, nanoparticulated, with particle diameter ranging from 30 to 50 and purity ranging from 95 to 99.9%.

In a preferred category, the purity of the silver oxide is of 99.9%. Thus, the present galvanic chroming process of the present invention imparts to the chromed product/material/device the antibacterial property added to the present-day list of benefits which chroming already provides, among which:
- high resistance to corrosion;
- high resistance to wear;
- extremely smooth and easy to clean; and
- color and brightness of great acceptance and value.

In a preferred embodiment of the invention, the galvanic process generates a chromed product of multiple overlapping metallic layers. Thus, the present invention further provides a material with silver nanoparticles, comprising at least one nickel layer (101) overlapping a substrate (100) and at least one chrome layer (102) overlapping the at least one nickel layer (101), wherein:
(i) the thickness of at least one or each layer nickel 101 ranges from 5 to 30 µm and at least one of the nickel layers 102 has dispersed silver nanoparticles comprising silver oxide in its pure state with 95-99% purity;
(ii) the outer chrome layer 102 has minimum thickness of 0.2 µm and may reach maximum thickness of 1 µm;
characterized in that the silver nanoparticles have a diameter ranging from 30 to 50 nm.

In a preferred embodiment of the invention, the minimum thickness of the sum of the nickel layers 101 is of 10 µm.

In another preferred embodiment of the invention, the last nickel layer 101 has dispersed silver nanoparticles.

The present invention can generate a product with one, two, three or more nickel layers 101 and an outer chrome layer 102, wherein at least the last nickel layer 101 comprises dispersed silver particles.

As a more logic option, the silver particles were initially added to the chrome solution that promotes the outer layer 102, but, due to the chemical insolubility of this relation, the silver particles, as time passed, generated a silver decantation reaction in the galvanic bath, impairing the process altogether. Moreover, the addition of the silver particles to the chrome bath 102 did not prove to be interesting, since after some time the silver particles began to destruct the finish of the chrome bath, generating surface roughness and causing rugosity on the finish of the material.

It should be further mentioned that, because of the intrinsic characteristics of the chrome bath, it is not possible prevent the silver particles from sinking due to the agitation of the chrome bath.

Thus, for the case that the silver particles are added to the chrome bath, although the antibacterial efficiency is very good in the beginning of the operation, with the above-mentioned effect of the decantation the antibacterial efficiency is rapidly lost.

The nanoparticles were then added to the nickel bath with additivation range of 2 to 3 ppm, so that the bath will have a prolonged useful life, without the need to correct the mixture and thus achieve the acceptable antibacterial efficiency without making the process too expensive and so as not to impair the chemical solubility of the bath. However, it should be noted that the process results from the capability of keeping the silver nanoparticles in suspension. In a preferred but not compulsory manner, such a solution can be reached by stirring the nickel bath.

Besides solving the question of the process, the stirring of the nickel bath does not impair the bath at all. Naturally, any stirring technique known from the prior art may be applied, without this limiting the protection of the present invention. It should be noted that a possible problem might result from the step of filtering the bath, which, unexpectedly, does not occur. Thus, the present invention achieves the antibacterial result even for lower concentrations of silver nanoparticles. Thus, in an alternative preferred embodiment, the number of silver nanoparticles may be so small that it will be difficult, is not impossible, with the present-day techniques, to detect the presence thereof in the product when functioning with its antibacterial action.

Anyway, in a preferred embodiment, the additivation is made from 0.005 ppm to 2.6 ppm. It should be noted that any value within this range may be used, but this is no factor limiting the present invention.

Although the outer chrome layer has a small thickness (0.2 to 1 µm), one observes that this layer becomes permeable, and so the antibacterial action is kept, even with the nanoparticles being in a more internal layer.

This occurs because the inner chrome layer is cracked or microcracked. In the bottom, the chrome layer 102 is like a web, that is, it does not exhibit surface continuity, which makes it possible, in the regions of the chrome layer 102 it is interrupted, to keep communication with the nanoparticles that are in a more internal layer, which enables them to develop their antibacterial action. On the other hand, the chrome layer 102 is "permeable" to the action of the silver nanoparticles.

It should be further noted that the titanium, well known for its antibacterial action, may be used in substitution for silver particles. Anyways, one observed that this compound has solubility problems that are not identified in the use of silver according to the above-described process. Even so, even if it does not promote as interesting results as in the case of using silver, it is still possible to obtain a satisfactory solution.

With the present process of the present invention, the silver nanoparticles remain incorporated in the nickel layer 101, imparting antibacterial action for indefinite time, without limitation even to the existence of the chromed layer, since even if the latter wears down, the nickel layer 101 remains on the material on which it has been applied, thus guaranteeing that the silver particles 105, which are included in the nickel layer 101, continue to act.

Thus, the chrome layer 102 is not compulsory for the antibacterial function of the nickel layer 101 with silver particles. This chrome layer 102 has one further esthetic appeal, besides prolonging the durability of the material. However, one notes that the great difficulty encountered until the appearance of the present invention results exactly from the possibility of keeping a chrome layer 102 and the antibacterial function at the same time.

Additionally, this process has the advantage that it can be applied to both metallic substrates 100 and plastic substrates 100, and with the same antibacterial efficiency.

Therefore, the nanoparticulate material obtained by the present process exhibits efficient antibacterial action and can be applied to various materials, such as sanitary metals or bathroom fixtures such as taps, particularly hospital taps, door-nobs, surgical instruments that need constant cleansing. The most interesting thing is that the present invention, being able to be applied to any prior-art object on which nickel baths have already been applied by galvanization, can be object of the antibacterial solution of the present invention.

Thus, the material or product on which the solution of the present invention is applied is not limitative of the protection scope of the present invention. For instance, one may apply a nickel layer 101 with silver particles 105 and an outer chrome layer 102 on to a part such as a door-handle of a vehicle, or on to handrails of subway escalators, or on to products for household or social use.

What matters to understand is that the product will have the following configuration: a plastic or metallic substrate 100, at least one nickel layer 101 comprising silver nanoparticles 105 and at least one outer chrome layer 102, the chrome layer 102 being permeable to the antibacterial action of the silver particles, as explained above.

### EXAMPLE: Test for Efficacy and Antimicrobial Activity

In order to prove the antibacterial efficacy of the proposed process, two 5x5cm square brass plates identified as OS 32780/01 free from antibacterial coating and OS 32780/02 having an antibacterial coating with additivation of 2.6 ppm of silver nanoparticles according to the above-described process, were contaminated under equal conditions and concentrations by two species, S. aureus and E. coli.

The plate OS 32780/01, free from antibacterial coating, was subjected to the galvanic process comprising the steps of: chemical degreasing 1; washing in water 2; cathotic electrolytic degreasing 3; andic electrolytic degreasing 4; washing with water 5; washing with water 6; acidic activation 7; neutral activation 8; washing with water (9); two nickel baths 10a; three times washing with water 11, 12, 13; chrome solution bath 14; and washing in water 15, among which said metallic baths correspond to steps 10a and 14.

The plate OS 32780/02, having antibacterial coating with additivation of 2.6 ppm of silver nanoparticles, was subjected to the galvanic process comprising the steps of: chemical degreasing 1; washing in water 2; cathotic electrolytic degreasing 3; andic electrolytic degreasing 4; washing with water 5; washing with water 6; acidic activation 7; neutral activation 8; washing with water (9); one nickel bath 10a; one nickel bath additivated with silver nanoparticles 10b; three times washing with water 11, 12, 13; chrome solution bath 14; and washing in water 15, thus comprising the metallic baths 10a, 10b and 14.

Thus, both plates were coated with two nickel layers and one chrome layer 102.

On plate OS 32780/02 one observes that the additivation with silver nanoparticles took place in the second nickel bath 10b. Thus, although it was not compulsory, with only one option, the nickel layer 101 additivated with silver nanoparticles corresponds to the second nickel layer 101. In these circumstances one uses preferably baths arranged in sequence, wherein the last nickel bath is that which contains the silver nanoparticles 105 (preferably by agitation).

The methodology employed was based on: JIS Z 2801:2000 Japanese Industrial Standard - Antimicrobial product - Test for antimicrobial activity and efficacy.

In order to follow up and quantify the reduction in the number of microorganisms, the counts were made in the time 0 and 24 hours after storage of the parts at room temperature.

The results are shown in the Tables below:

**Table 1 - Results of antibacterial activity for S. aureus.**

| **Sample** | **Number of bacteria in time 0** | **Number of bacteria in 24 hours** | **Logarythmic reduction** | **Percentage of reduction** |
|---|---|---|---|---|
| OS 32780/01 | 2.7.105 | 2.9.105 | None | |
| OS 32780/02 | 2.7.105 | 7.8.10² | 2.54 | 99.71 |

**Table 2 - Results of antibacterial activity for E. coli.**

| **Sample** | **Number of bacteria in time 0** | **Number of bacteria in 24 hours** | **Logarythmic reduction** | **Percentage of reduction** |
|---|---|---|---|---|
| OS 32780/01 | 2.5.105 | 3.2.105 | None | |
| OS 32780/02 | 2.5.105 | 1.3.10² | 3.29 | 99.95 |

As can be seen in the above tables, for the two microorganisms used, the sample galvanized by the process of the present invention exhibited potent antibacterial action, with inhibition indexes higher than 99.7% for both cases. However, it should be noted that the present invention is not limited to necessarily so high antibacterial values. It is the application and the type of product that will dictate the need for antibacterial action.

Preferred examples and embodiments having been described, one should understand that the scope of the present invention embraces other possible variations, being limited only by the contents of the accompanying claims.

## Claims

1. A galvanic process comprising at least one substrate (100), onto which it is applied:
(i) at least one nickel bath (10b) that results in at least one nickel layer (101); and
(ii) at least one chrome bath (14) that results in at least one chrome layer (102);
the galvanic process being such that the at least one nickel bath (10b) and the at least one chrome bath (14) are metal baths wherein the substrate (100) is fixed to a negative pole of a source of direct current and is then put into a solution in which there are dispersed metallic ions, the substrate (100) playing the role of a cathode and the at least one nickel bath (10b) incorporates silver nanoparticles which comprise silver oxide in its pure state with 95%-99.9% purity, and **characterised in that** the silver nanoparticles have a diameter ranging from 30 to 50 nm.

2. The process according to claim 1, **characterized in that** the silver nanoparticles are added to at least one nickel bath (10b) at concentrations of 2 to 3 ppm.

3. The process according to claim 2, **characterized in that** the silver nanoparticles are added at the concentration of 2.6 ppm.

4. The process according to claim 1, **characterized in that** the substrate (100) is selected from metals and plastics, comprising:
a) metals selected from copper and alloys thereof, zinc and alloys thereof, aluminum and alloys thereof and steel; and
b) plastics which can have a galvanized surface.

5. The process according to claim 4, **characterized in that** the plastic is selected from ABS (Acrylinitrile butadiene styrene), Nylon (polyamide) and PBT (Polybutylene Terephthalate).

6. The process according to claim 1, **characterized in that** the at least one nickel bath (10b) comprises nickel sulfate, nickel chloride, boric acid and commercial brightening additive.

7. The process according to claim 6, **characterized in that** the nickel bath (10b) is carried out for 9 to 11 minutes with current density of 3 - 6 A/m².

8. The process according to claim 1, **characterized in that** the at least one chrome bath (14) comprises a chrome salt, sulfuric acid and commercial catalysts.

9. The process according to claim 8, **characterized in that** the chrome bath (14) is carried out for 2 minutes and 15 seconds and with current density ranging from 0.08 to 0.32 A/m².

10. The process according to claim 1, **characterized by** comprising:
(i) two nickel baths (10a) (10b); and
(ii) one chrome bath (14),
**characterized in that** the incorporation of silver nanoparticles takes place in the second nickel bath (10b).

11. A material with silver nanoparticles, comprising at least one nickel layer (101) overlapping a substrate (100) and at least one chrome layer (102) overlapping the at least one nickel layer (101), wherein:
(i) the thickness of each nickel layer (101) ranges from 5 to 30 µm and the at least one nickel layer (101) has dispersed silver nanoparticles, the silver nanoparticles comprising silver oxide in its pure state with 95-99% purity; and
(ii) the thickness of the chrome layer (102) ranges from 0.2 µm to 1 µm;
**characterized in that** the silver nanoparticles have a diameter ranging from 30 to 50 nm.

12. The material with silver nanoparticles according to claim 11, **characterized in that** the minimum thickness of the nickel layers (101) is 10 µm.

13. The material according to claim 11, **characterized in that** the last nickel layer (101) has dispersed silver nanoparticles (105).

14. The process according to any one of claims 1 to 10 wherein the substrate is a metallic or plastic substrate, for example sanitary metals or bathroom fixtures such as taps, particularly hospital taps, door-nobs, surgical instruments that need constant cleansing.

15. The material of any one of claims 11 to 13 wherein the substrate is a metallic or plastic substrate, for example sanitary metals or bathroom fixtures such as taps, particularly hospital taps, door-nobs, surgical instruments that need constant cleansing.

## Patentansprüche

1. Galvanisches Verfahren, umfassend zumindest ein Substrat (100), auf das aufgebracht wird:
(i) zumindest ein Nickelbad (10b), aus dem sich zumindest eine Nickelschicht (101) ergibt; und
(ii) zumindest ein Chrombad (14), aus dem sich zumindest eine Chromschicht (102) ergibt;
wobei das galvanische Verfahren so abläuft, dass das zumindest eine Nickelbad (10b) und das zumindest eine Chrombad (14) Metallbäder sind, wobei das Substrat (100) mit einem negativen Pol einer Gleichstromquelle verbunden ist und dann in eine Lösung eingebracht wird, in der dispergierte metallische Ionen vorhanden sind, wobei das Substrat (100) die Funktion einer Kathode hat und das zumindest eine Nickelbad (10b) Silber-Nanopartikel einbindet, die Silberoxid in seinem reinen Zustand mit 95%-99,9% Reinheit umfassen, und **dadurch gekennzeichnet, dass** die Silber-Nanopartikel einen Durchmesser im Bereich von 30 bis 50 nm aufweisen.

2. Verfahren nach Anspruch 1, **dadurch gekennzeichnet, dass** die Silber-Nanopartikel zumindest einem Nickelbad (10b) in Konzentrationen von 2 bis 3 ppm zugegeben werden.

3. Verfahren nach Anspruch 2, **dadurch gekennzeichnet, dass** die Silber-Nanopartikel in der Konzentration von 2,6 ppm zugegeben werden.

4. Verfahren nach Anspruch 1, **dadurch gekennzeichnet, dass** das Substrat (100) ausgewählt ist aus Metallen und Kunststoffen, umfassend:
a) Metalle, ausgewählt aus Kupfer und Legierungen davon, Zink und Legierungen davon, Aluminium und Legierungen davon und Stahl; und
b) Kunststoffe, die eine galvanisierte Oberfläche aufweisen können.

5. Verfahren nach Anspruch 4, **dadurch gekennzeichnet, dass** der Kunststoff ausgewählt ist aus ABS (Acrylinitril-Butadien-Styrol), Nylon (Polyamid) und PBT (Polybutylenterephthalat).

6. Verfahren nach Anspruch 1, **dadurch gekennzeichnet, dass** das zumindest eine Nickelbad (10b) Nickelsulfat, Nickelchlorid, Borsäure und handelsübliche Aufhellungsadditive umfasst.

7. Verfahren nach Anspruch 6, **dadurch gekennzeichnet, dass** das Nickelbad (10b) 9 bis 11 Minuten lang mit einer Stromdichte von 3 - 6 A/m² durchgeführt wird.

8. Verfahren nach Anspruch 1, **dadurch gekennzeichnet, dass** das zumindest eine Chrombad (14) ein Chromsalz, Schwefelsäure und handelsübliche Katalysatoren umfasst.

9. Verfahren nach Anspruch 8, **dadurch gekennzeichnet, dass** das Chrombad (14) für 2 Minuten und 15 Sekunden und mit einer Stromdichte im Bereich von 0,08 bis 0,32 A/m² durchgeführt wird.

10. Verfahren nach Anspruch 1, **dadurch gekennzeichnet, dass** es umfasst:
(i) zwei Nickelbäder (10a) (10b); und
(ii) ein Chrombad (14),
**dadurch gekennzeichnet, dass** die Einbindung von Silber-Nanopartikeln im zweiten Nickelbad (10b) erfolgt.

11. Material mit Silber-Nanopartikeln, umfassend zumindest eine Nickelschicht (101), die ein Substrat (100) überdeckt, und zumindest eine Chromschicht (102), die die zumindest eine Nickelschicht (101) überdeckt, wobei:
(i) die Dicke jeder Nickelschicht (101) im Bereich von 5 bis 30 µm liegt und die zumindest eine Nickelschicht (101) dispergierte Silber-Nanopartikel aufweist, wobei die Silber-Nanopartikel Silberoxid in seinem reinen Zustand mit 95-99% Reinheit umfassen; und
(ii) die Dicke der Chromschicht (102) im Bereich von 0,2 µm bis 1 µm liegt;
**dadurch gekennzeichnet, dass** die Silber-Nanopartikel einen Durchmesser im Bereich von 30 bis 50 nm aufweisen.

12. Material mit Silber-Nanopartikeln nach Anspruch 11, **dadurch gekennzeichnet, dass** die Mindestdicke der Nickelschichten (101) 10 µm beträgt.

13. Material nach Anspruch 11, **dadurch gekennzeichnet, dass** die letzte Nickelschicht (101) dispergierte Silber-Nanopartikel (105) aufweist.

14. Verfahren nach einem der Ansprüche 1 bis 10, wobei das Substrat ein Metall- oder Kunststoffsubstrat ist, zum Beispiel Sanitärmetalle oder Badinstallationen im Sanitärbereich, wie Armaturen, insbesondere Krankenhausarmaturen, Türknäufe bzw. Klinken und chirurgische Instrumente, die ständig gereinigt werden müssen.

15. Material nach einem der Ansprüche 11 bis 13, wobei das Substrat ein Metall- oder Kunststoffsubstrat ist, zum Beispiel Sanitärmetalle oder Badinstallationen im Sanitärbereich, wie Armaturen, insbesondere Krankenhausarmaturen, Türknäufe bzw. Klinken und chirurgische Instrumente, die ständig gereinigt werden müssen.

## Revendications

1. Procédé galvanique comprenant au moins un substrat (100) sur lequel est appliqué :
(i) au moins un bain de nickel (10b) qui résulte en au moins une couche de nickel (101) ; et
(ii) au moins un bain de chrome (14) qui résulte en au moins une couche de chrome (102) ;
le procédé galvanique faisant en sorte que le au moins un bain de nickel (10b) et le au moins un bain de chrome (14) sont des bains métalliques dans lesquels le substrat (100) est fixé au pôle négatif d'une source de courant continu, puis est placé dans une solution dans laquelle se trouvent des ions métalliques dispersés, le substrat (100) jouant le rôle de cathode et le au moins un bain de nickel (10b) incorporant des nanoparticules d'argent comprenant de l'oxyde d'argent à l'état pur avec une pureté de 95 à 99,9%, et **caractérisé en ce que** les nanoparticules d'argent ont un diamètre compris entre 30 et 50 nm.

2. Procédé selon la revendication 1, **caractérisé en ce que** les nanoparticules d'argent sont ajoutées à au moins un bain de nickel (10b) à des concentrations de 2 à 3 ppm.

3. Procédé selon la revendication 2, **caractérisé en ce que** les nanoparticules d'argent sont ajoutées à une concentration de 2,6 ppm.

4. Procédé selon la revendication 1, **caractérisé en ce que** le substrat (100) est choisi parmi des métaux et des plastiques, comprenant :
a) des métaux sélectionnés parmi du cuivre et ses alliages, du zinc et ses alliages, de l'aluminium et ses alliages et de l'acier; et
b) des plastiques qui peuvent avoir une surface galvanisée.

5. Procédé selon la revendication 4, **caractérisé en ce que** le plastique est sélectionné parmi l'ABS (acrylinitrile butadiène styrène), le Nylon (polyamide) et le PBT (polybutylène téréphtalate).

6. Procédé selon la revendication 1, **caractérisé en ce qu'**au moins un bain de nickel (10b) comprend en outre du sulfate de nickel, du chlorure de nickel, de l'acide borique et un additif éclaircissant commercial.

7. Procédé selon la revendication 6, **caractérisé en ce que** le bain de nickel (10b) est réalisé pendant 9 à 11 minutes avec une densité de courant de 3 à 6 A/m².

8. Procédé selon la revendication 1, **caractérisé en ce que** le au moins un bain de chrome (14) comprend un sel de chrome, de l'acide sulfurique et des catalyseurs commerciaux.

9. Procédé selon la revendication 8, **caractérisé en ce que** le bain de chrome (14) est réalisé pendant 2 minutes et 15 secondes et avec une densité de courant allant de 0,08 à 0,32 A/m².

10. Procédé selon la revendication 1, **caractérisé en ce qu'**il comprend :
(i) deux bains de nickel (10a) (10b); et
(ii) un bain de chrome (14),
**caractérisé en ce que** l'incorporation de nanoparticules d'argent a lieu dans le deuxième bain de nickel (10b).

11. Matériau additionné de nanoparticules d'argent, comprenant au moins une couche de nickel (101) recouvrant un substrat (100) et au moins une couche de chrome (102) recouvrant la au moins une couche de nickel (101), dans lequel :
(i) l'épaisseur de chaque couche de nickel (101) va de 5 à 30µm et la au moins une couche de nickel (101) contient des nanoparticules d'argent dispersées, les nanoparticules d'argent comprenant de l'oxyde d'argent à l'état pur avec une pureté de 95 à 99% ; et
(ii) l'épaisseur de la couche de chrome (102) est comprise entre 0,2µm et 1µm ;
**caractérisé en ce que** les nanoparticules d'argent ont un diamètre compris entre 30 et 50 nm.

12. Matériau additionné de nanoparticules d'argent selon la revendication 11, **caractérisé en ce que** l'épaisseur minimale des couches de nickel (101) est de 10 µm.

13. Matériau selon la revendication 11, **caractérisé en ce que** la dernière couche de nickel (101) contient des nanoparticules d'argent dispersées (105).

14. Procédé selon l'une des revendications 1 à 10 dans lequel le substrat est un substrat métallique ou plastique, par exemple des métaux sanitaires ou des accessoires de salle de bain tels que des robinets, en particulier des robinets d'hôpital, des poignées de porte, des instruments chirurgicaux nécessitant un nettoyage constant.

15. Matériau selon l'une des revendications 11 à 13 dans lequel le substrat est un substrat métallique ou plastique, par exemple des métaux sanitaires ou des accessoires de salle de bain tels que des robinets, en particulier des robinets d'hôpital, des poignées de porte, des instruments chirurgicaux nécessitant un nettoyage constant.
